# EUROPÄISCHE PATENTSCHRIFT

(11) **EP 4 590 115 B1**
(45) Veröffentlichungstag und Bekanntmachung des Hinweises auf die Patenterteilung: **11.11.2026**
(21) Anmeldenummer: 23785714.9
(22) Anmeldetag: 13.09.2023
(51) Int. Cl.: A01F 12/26

(54) **KORBSEGMENT FÜR EINEN MÄHDRESCHER**
CONCAVE SEGMENT FOR COMBINE HARVESTER
SEGMENT DE PANIER POUR MOISSONNEUSES-BATTEUSES

(30) Priorität: 23.09.2022 DE 202022105346 U
(43) Veröffentlichungstag der Anmeldung: 30.07.2025
(73) Patentinhaber: Zang, Günter, 63825 Schöllkrippen (DE); Zang, Michael, 63825 Schöllkrippen (DE)
(72) Erfinder: Zang, Günter, 63825 Schöllkrippen (DE); Zang, Michael, 63825 Schöllkrippen (DE)
(74) Vertreter: RGTH
(86) Internationale Anmeldenummer: PCT/DE2023/100682
(87) Internationale Veröffentlichungsnummer: WO 2024/061413

(56) Entgegenhaltungen:
- EP-A1- 3 627 985
- DE-A1- 102016 117 598
- US-A1- 2014 087 793

## Beschreibung

Die Erfindung betrifft ein Korbsegment für einen Mähdrescher zum Abscheiden von Erntegut, wobei sich das Korbsegment in einer Umfangsrichtung bogenförmig um eine Korbachse erstreckt und mehrere Fingerleisten aufweist, die sich parallel zur Korbachse erstreckende Querleisten aufweisen, an denen jeweils eine Vielzahl von Fingern parallel zueinander angeordnet ist, die in einem spitzen Fingerwinkel zu einer quer zur Längsachse der Querleiste sich erstreckenden Vertikalen geneigt sind.

Ein Korbsegment dieser Art ist beispielsweise in der DE 10 2016 117 598 A1 beschrieben. Weitere Korbsegmente sind aus der EP 3 627 985 A1 und der US 2014/087793 A1 bekannt.

Nach dem Stand der Technik sind prinzipiell Tangentialdrescheinrichtungen sowie Axialdrescheinrichtungen bekannt. Bei einer tangentialen Drescheinrichtung sind die rotierende Dreschtrommel und der damit zusammenarbeitende Dreschkorb quer zur Bewegungsrichtung des Mähdreschers angeordnet. Das Erntegut wird dem Dreschkorb zugefügt und zwischen Dreschkorb und Trommel hindurchgeführt, so dass der Drusch auf einem vergleichsweise kurzen Weg erfolgt. Das vom Dreschkorb nach hinten abgegebene Stroh gelangt anschließend auf einen in sich in Längsrichtung des Mähdreschers erstreckenden Schüttler oder bei Hybrid-Mähdreschern in einen oder zwei Axialrotoren zur Weiterverarbeitung.

Axialdrescheinrichtungen besitzen einen Korb, der sich mit seiner Längsachse in Längsrichtung des Mähdreschers erstreckt und zu dem das Erntegut axial zugeführt wird.

Nach dem Stand der Technik sind auch sog. Hybrid-Mähdrescher bekannt, die als Tangential-Axialfluss-Mähdrescher dadurch gekennzeichnet sind, dass sie tangential dreschen und axial abscheiden.

Die erfindungsgemäßen Korbsegmente betreffen sowohl Tangential- als auch Axial-Drescheinrichtungen, deren Körbe sich aus mehreren Korbsegmenten zusammensetzen.

In Bezug auf die Materialflussrichtung schräg gestellte Finger eines Korbsegmentes wirken als Leitelemente für das Erntegut und unterstützen dessen Transport und die Abscheidung des Getreidekornes von einem frontseitigen zu einem heckseitigen Ende einer Abscheidevorrichtung. Die beim Transport entstehende Reibung ist gegenüber sich quer zur Rotorachse erstreckenden Leisten verringert. Hierdurch kann die Antriebsleistung für den Abscheiderotor der Abscheidevorrichtung erheblich minimiert werden. Weiterhin wird das Erntegut weniger beansprucht und seine Struktur bleibt besser erhalten. Die verringerte Reibung ermöglicht auch einen gleichmäßigen Transport des Erntegutes. Die einzelnen Finger des in der DE 10 2016 117 598 A1 beschriebenen Korbsegments bestehen aus Blechstreifen mit zwei linear verlaufenden Längsseiten und einer abgerundeten Fingerspitze. Die Breite der Finger ist deutlich kleiner als die Fingerlänge bzw. die Länge der Längsseiten.

Ausgehend von diesem Stand der Technik ist es Aufgabe der vorliegenden Erfindung, ein Korbsegment der eingangsgenannten Art in Bezug auf die erreichbare Korn-Abscheideleistung zu optimieren.

Diese Aufgabe wird durch das Korbsegment nach Anspruch 1 gelöst, das dadurch gekennzeichnet ist, dass zumindest ein Teil der Finger an einer der beiden Längsseiten ein wellen- oder sägezahnartiges Profil aufweist. Diese Konstruktion ist sowohl bei Axial-Drescheinrichtungen als auch bei Tangential-Drescheinrichtungen verwendbar. Bedingt durch den spitzen Fingerwinkel der Finger gegenüber einer Vertikalen zur Korbsegmentlängsachse sind die Längsseiten mit dem wellen- oder sägezahnartigen Profil gegen die Hauptflussrichtung ausgerichtet. Bei einem tangential arbeitenden System durchläuft das Erntegut den Korb geradlinig nur ein einziges Mal, weshalb die Finger vorzugsweise stärker nach der Seite ausgerichtet werden, um den gleichen Schnittwinkel zur Druschkante zu erreichen. Wesentlich ist, dass das Erntegut in der Flussrichtung schräg oder vorzugsweise vertikal auf die wellen- oder sägezahnförmigen Längsseiten auftrifft. Bei der Wahl eines sägezahnartigen Profils besteht das Zahnprofil vorzugsweise aus einem gleichschenkligen Dreieck mit einer abgerundeten Spitze, womit ein Körnerbruch verhindert wird. Die vorliegende Erfindung umfasst auch solche Ausführungsformen, bei denen ein oder mehrere Sägezähne mit einem oder mehreren Wellenbergen sowie ein oder mehrerer Einbuchtungen mit Wellentälern an einer Längsseite aufeinander folgen oder in wechselnder Reihenfolge angeordnet sind.

Weiterbildungen der Erfindung sind in den Unteransprüchen beschrieben.

Nach einer konkreten bevorzugten Ausführungsform besteht das Wellenprofil aus mindestens einem Wellenberg, vorzugsweise aus mindestens zwei Wellenbergen und zwei Wellentälern bzw. das Sägezahnprofil aus mindestens zwei Einbuchtungen und mindestens einer Zahnspitze. Der Höhenabstand eines Wellenberges zum Wellental oder einer Zahnspitze zur Einbuchtung beträgt (in vertikaler Richtung gemessen) vorzugsweise 1,5 mm bis 2 mm, insbesondere 1,75 mm.

Bevorzugt liegt die Fingerbreite an den Wellentälern oder den Einbuchtungen gemessen zwischen 12 mm und 13 mm. Die Fingerlänge beträgt, gemessen in vertikaler Richtung zur Querleiste 40 mm bis 60 mm, vorzugsweise 42 mm. Die Dicke der Finger liegt bei 7 mm bis 9 mm, vorzugsweise bei 8 mm.

Um die Korbabscheidung weiterhin zu optimieren sind in einer Ausführungsvariante der Erfindung die Finger nebeneinanderliegender Querleisten zueinander versetzt angeordnet, was die Kornabscheidung im Korbsegment bzw. ein aus mehreren Korbsegmenten bestehenden Korb begünstigt. Eine versetzte Anordnung besteht darin, dass die Fingerspitze bzw. die Fingerspitzen einer Reihe auf den Bereich zwischen zwei Fingern der benachbarten Fingerleisten zeigen. Bei axialen Dreschsystemen wird hierdurch die Führung des Erntegutes über die gesamte Oberfläche optimiert. Die abwechselnd angeordneten Durchtrittsöffnungen zwischen benachbarten Fingerreihen optimieren die Abscheideleistung der Körner und verhindern den unerwünschten Durchtritt von Kurzstrohanteilen.

Vorzugsweise ist das freie Ende der Finger jeweils zur benachbarten Querleiste beabstandet angeordnet, insbesondere in einem Abstand von 10 mm bis 15 mm, insbesondere bei 13 mm. Der Abstand benachbarter Finger auf ein und derselben Querleiste beträgt 15 mm bis 20 mm.

Bei einem Tangential-Mähdreschkorb sind die Finger parallel zueinander angeordneter Querleisten vorzugsweise unter gegensinnig angeordneten Fingerwinkeln ausgerichtet, wohingegen die Finger bei einem Axial-Mähdreschkorb vorzugsweise im Winkelmaß gleichsinnig angeordnete Fingerwinkel bevorzugt werden. Demgemäß werden beispielsweise Fingerwinkel von ± (20° bis 50°), vorzugsweise ± (30° bis 40°) gewählt. Die unterschiedlichen Vorzeichen deuten an, dass von Fingerleiste zu Fingerleiste oder auch sequenzweise der Fingerwinkel gegensinnig geändert wird. So kann der "Richtungswechsel" der Finger von Fingerreihe zur nächstliegenden Fingerreihe jeweils alternierend erfolgen oder derart, dass zwei nebeneinanderliegende Fingerreihen einen spitzen Fingerwinkel von beispielsweise -20° und die darauffolgenden zwei Fingerreihen einen Fingerwinkel von +20° aufweisen Die Vorzeichen + oder - sind als im Uhrzeigersinn oder gegen den Uhrzeigersinn ausgebildete Winkelneigungen gegenüber einer Vertikalen zur Querleistenlängsachse zu verstehen. Auch entsprechende Dreier- oder Vierer-Sequenzen sind im Rahmen der vorliegenden Erfindung möglich.

Die gewählten spitzen Fingerwinkel sind bei Axial-Dreschwerken im Regelfall kleiner als bei Tangential-Dreschwerken.

Nach einer Weiterbildung der Erfindung werden der Fingerwinkel und die Ausrichtung der Finger so gewählt, dass das Erntegut zumindest im Wesentlichen vertikal auf das wellen- oder sägezahnartige Profil auftrifft. Die Flussrichtung des Erntegutes ergibt sich bei Axial-Dreschwerken aus der Summe der längsaxialen Bewegung und der Rotationsbewegung.

Nach einer weiteren Ausführungsform sind die Finger schwenkbar ausgebildet, beispielsweise dadurch, dass die Querleisten um ihre Längsachse drehbar angeordnet sind.

Weitere Details und Ausführungsvarianten ergeben sich aus den Zeichnungen. Es zeigen:
- Fig. 1: ein Korbsegment in einer perspektivischen Ansicht,
- Fig. 2: das Korbsegment nach Fig. 1 in einer Draufsicht,
- Fig. 3: eine Seitenansicht eines Korbsegmentes,
- Fig. 4: eine Detailansicht zweier Fingerreihen.

Der Aufbau von Mähdreschern ist im Prinzip nach dem Stand der Technik bekannt. Die wesentlichen Teile des Mähdreschers bestehen aus einer Haspel zum Niederdrücken der Getreidehalme, einem Messerbalken und der Einzugsschnecke, die das geschnittene Erntegut auf einen Schrägförderer transportiert. Zwischen dem Schrägförderer und der nachgeschalteten Drescheinrichtung mit einer Dreschtrommel und einem Dreschkorb ist eine Steinfangmulde angeordnet. Die Dreschtrommel drischt das Erntegut und trennt dieses, wobei Getreide und Spreu, die durch den Dreschkorb auf eine Zuführeinrichtung fallen, einem Reinigungssystem zugeführt werden, in dem die Spreu entfernt und das saubere Getreide und andere saubere Samen einem Körnertank zugeführt werden. Gedroschenes und vom Getreide befreites Stroh wird durch einen Auslass des Dreschspaltes des Dreschwerks ausgestoßen und an einen Schüttler, weitere Abscheiderotoren oder eine Auslasstrommel aufgegeben, welche das vom Restkorn befreite Stroh an der Rückseite des Mähdreschers auswirft. Wie bereits eingangs erwähnt, kann das Dreschwerk als Tangentialdreschwerk oder axial arbeitendes Dreschwerk ausgebildet sein. Die vorliegende Erfindung betrifft beide Ausführungsvarianten, nämlich die Ausbildung eines Korbsegmentes, das entweder in einem Tangentialdreschwerk oder als Teil eines Dreschkorbes eines Axialdreschwerkes verwendet werden kann. Die wesentliche Neuerung des Korbsegments betrifft die Ausgestaltung der einzelnen Finger der Fingerleisten.

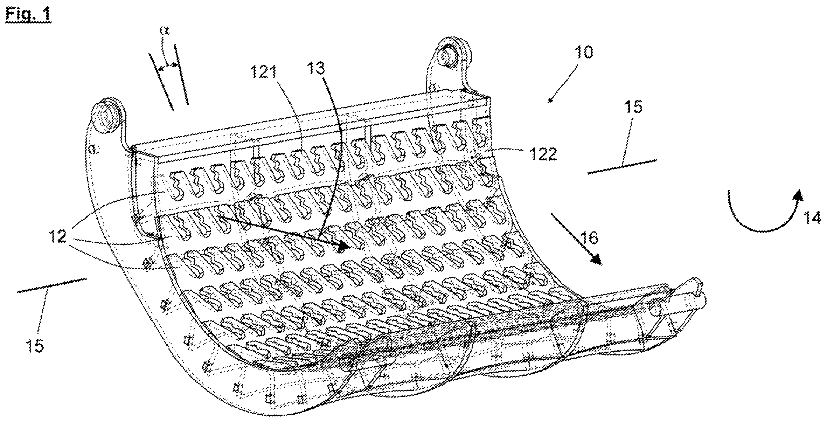

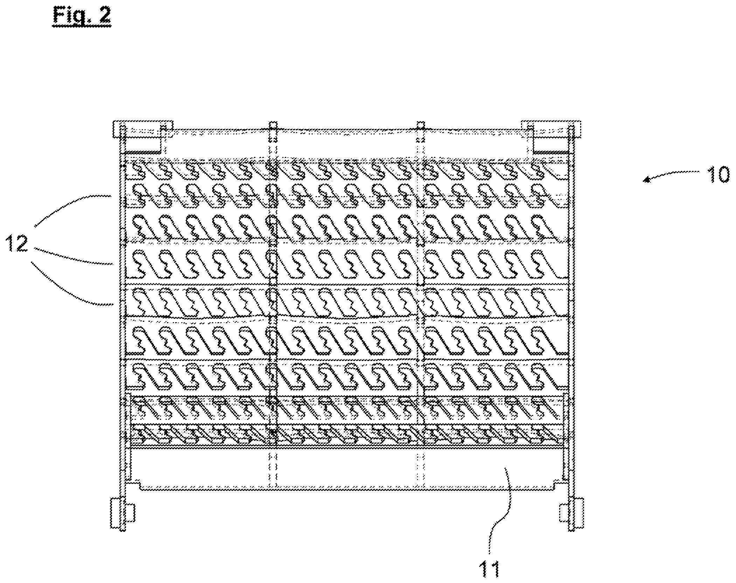

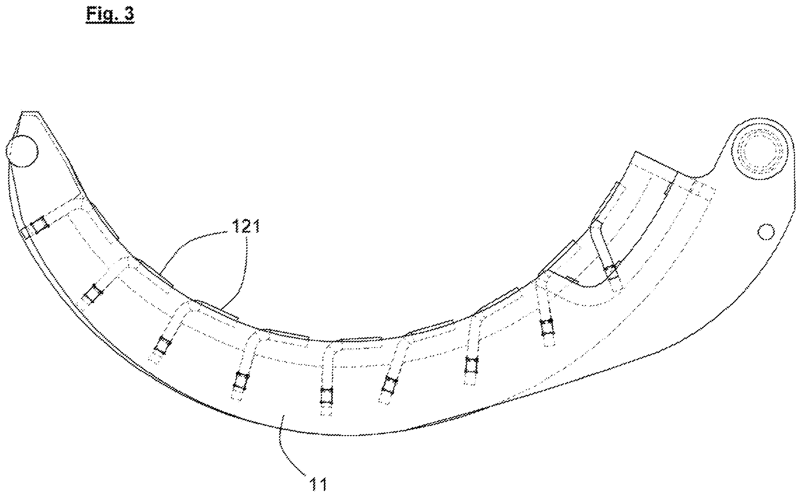

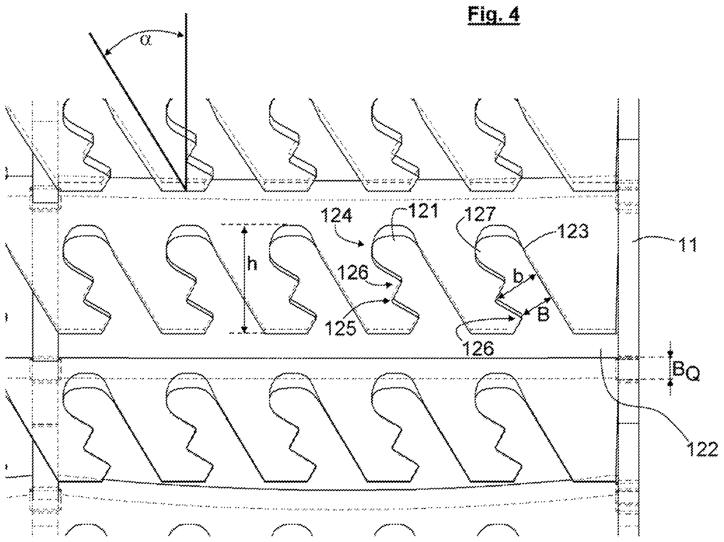

Fig. 1 bis Fig. 3 zeigen ein Korbsegment 10 mit einem Rahmen 11 sowie mehreren nebeneinander angeordneten Fingerleisten 12, die sich parallel zur Korbachse 13 erstrecken. Die einzelnen Finger 121 sind an Querleisten 122 befestigt und schrägwinklig, d.h. unter einen spitzen Fingerwinkel α, der durch die Fingerlängsachse und eine Vertikale zur Querleiste gebildet wird, angeordnet. Die Finger 122 besitzen eine linear ausgebildete Längsseite 123 sowie eine mit einem Wellen- oder Sägezahnprofil ausgestattete Längsseite 124. Die Längsseite 124 weist eine Spitze 125, eine Einsenkung 126 sowie einen nachfolgenden Wellenberg 127 auf. Die Spitze 125 ist abgerundet, um einen Kornbruch zu vermeiden. Anstelle der in Fig. 4 dargestellten dreieckförmigen Zähne kann auch ein reines Wellenprofil verwendet werden, das aus Wellenbergen und Wellentälern, die den Spitzen 125 bzw. Einbuchtungen 126 entsprechen, verwendet werden. Das Wellenprofil kann gleichmäßig als Sinusprofil oder als ungleichmäßiges Profil ausgebildet sein. Wesentlich ist, dass die nicht lineare Kante Spitzen bzw. Wellenberge und Einbuchtungen bzw. Wellentäler besitzt.

Die Länge der Finger 121, die durch deren Höhe h in Verbindung mit dem spitzen Fingerwinkel α bestimmt wird, beträgt vorzugsweise 41,95 mm, kann sich jedoch bis zu 60 mm erstrecken.

Die schmalste Breite b der Finger 121, die durch das Maß der Einbuchtungen 126 bestimmt wird, ist 12,47 mm, die größte, durch die Wellenberge bzw. Zahnspitzen bestimmte größte Breite B 14,2 mm, woraus sich ein Abstand von Zahnspitze zur Einsenkung bzw. von Wellenberg zu Wellental von ca. 1,7 mm ergibt. Die Breite B_{Q} der Querleiste 122, an dem die Finger 121 befestigt sind, beträgt im Ausführungsbeispiel 9,43 mm.

Der im vorliegenden Ausführungsbeispiel für einen Axialdreschkorb gewählte Fingerwinkel (α) liegt bei 30°, womit erreicht wird, dass die nicht lineare sägezahn- oder wellenartige Kante gegen die Hauptrichtung des Erntegutstroms ausgerichtet ist. Bei einem Tangential-Dreschwerk durchläuft das Gut den Korb nur einmal geradlinig, weshalb vorzugsweise bei Körben bzw. Korbsegmenten in Tangential-Dreschwerken die Finger wechselweise ausgerichtet sind, wie dies beispielsweise in der DE 10 2021 112 099 A1 beschrieben und dargestellt wird. Konkret können die Finger nebeneinanderliegender Querleisten unter gegensinnig angeordneten Freiwinkeln ausgerichtet werden oder es Reihen sich Paare von Fingerleisten aneinander, bei denen ein aus zwei Fingerleisten bestehendes Paar unter einem negativen Fingerwinkel und die nächsten zwei Leisten unter einen positiven Fingerwinkel angeordnete Finger aufweisen. Bei geradlinigem Durchlauf des Erntegutes werden regelmäßig größere Fingerwinkel von bis zu 45° gewählt.

Die Dicke der Finger, die aus einzelnen Blechstreifen bestehen, beträgt 8 mm.

Der Pfeil 13 zeigt den Fluss des Erntegutstroms, der sich bei einem drehenden Rotor-Korb ergibt. Beispielsweise kann ein Rotor mit 20 Umdrehungen/Sekunden gedreht werden, womit sich eine Umfangsgeschwindigkeit von 400 m/sec ergibt. Die mechanische Umlenkung des Druschgutes erfolgt oberhalb des Rotors im Anschluss an den Korb in Drehrichtung durch vorhandene Leitbleche. Diese leiten pro Umdrehung das Gut z.B. um 15 cm weiter. Im unmittelbaren Bereich eines Dreschkorbes, der aus mehreren Korbsegmenten besteht, ist durch die ständig starke Zuführung von vorn, wodurch sich ein Materialfluss in Richtung des Pfeiles 16 ergibt. Das Korbsegment als Teil eines geschlossenen Korbes dreht sich in Richtung des Pfeiles 14 um die Drehachse 15. Die Kombination der Erntegutflussrichtung in Verbindung mit der Rotation führt zu einem Gesamtmaterialfluss, der durch den Pfeil 13 wiedergegeben werden soll.

Das dargestellte Wellen- oder Zackenprofil der einen Fingerlängsseite, bestehend aus zwei Spitzen und zwei Einbuchtungen ist nur ein Ausführungsbeispiel, das beispielsweise zu einer Wellenform mit mehr als zwei Wellenbergen und mehr als zwei Wellentälern (oder Spitzen und Einsenkungen) variiert werden kann. Entscheidend ist, dass die den Materialfluss zugewandte Längsseite der Finger nicht linear verläuft und dass der Finger unter einem Fingerwinkel schräggestellt angeordnet ist. In Feldversuchen wurden folgende Ergebnisse erzielt:
Die Reibungskraft, der das Erntegutmaterial beim Fluss ausgesetzt ist, ist deutlich geringer, weil die Fließrichtung des Materials schräg über die Ausbuchtungen verläuft, was mit einem ziehenden Schnitt verglichen werden kann. Durch den diagonalen Materialfluss trifft das zu dreschende Gut trotzdem effektiv gegen die Ausbuchtungen der Finger und wird gleitend abgestreift. Die Öffnungen zwischen den Fingern, nämlich der Abstand benachbarter Finger liegt zwischen ca. 17 mm und 20 mm. Das freie Ende eines jeden Fingers ist zur benachbarten Querleiste in einem Abstand von ca. 10 mm angeordnet. Hierdurch ergeben sich ausreichend große Öffnungen, um die abgestreiften Körner in großer Anzahl abzuscheiden.

Mitentscheidend für die sehr gute Funktion des Korbsegmentes ist die gewählte Fingerausrichtung gegen den Erntegutstrom. Dies führt zu einer längeren Verweilzeit des Erntegutmaterials im Dreschbereich, so dass bei weniger scharfer Einstellung der Dreschorgane sehr schonend bei extrem hoher Leistungen sehr geringen Verlusten gedroschen werden kann. Das erfindungsgemäße Korbsegment arbeitet verstopfungsfrei und kann für eine Vielzahl von Früchten verwendet werden, beispielsweise für Getreide, Raps, Bohnen, Mais und Sonnenblumen.

### Bezugszeichenliste

- 10: Korbsegment
- 11: Rahmen
- 12: Fingerleisten
- 121: Finger
- 122: Querleiste
- 123: lineare Längsseite
- 124: profilierte Längsseite
- 125: Spitzen
- 126: Einsenkungen
- 127: Wellenberg
- 13: Pfeil (Erntegutflussrichtung)
- 14: Drehrichtung
- 15: Drehachse und Korbachse
- 16: Erntegutflussrichtung
- α: Fingerwinkel
- l: Länge der Finger
- h: Höhe
- b: schmalste Breite
- B: größte Breite
- B_{Q}: Breite der Querleiste

## Patentansprüche

1. Korbsegment (10) für einen Mähdrescher zum Abscheiden von Erntegut, wobei sich das Korbsegment in einer Umfangsrichtung bogenförmig um eine Korbachse (15) erstreckt und mehrere Fingerleisten (12) aufweist, die sich parallel zur Korbachse (15) erstreckende Querleisten (122) aufweisen, an denen jeweils eine Vielzahl von Fingern (121) parallel zueinander angeordnet ist, die in einem spitzen Fingerwinkel (α) zu einer quer zur Längsachse der Querleiste (122) sich erstreckenden Vertikalen geneigt sind, **dadurch gekennzeichnet, dass** zumindest ein Teil der Finger (121) an einer der beiden Längsseiten (124) ein wellen- oder sägezahnartiges Profil (125, 126, 127) aufweist.

2. Korbsegment nach Anspruch 1, **dadurch gekennzeichnet, dass** das Wellenprofil mindestens einen Wellenberg, vorzugsweise mindestens zwei Wellenberge und zwei Wellentäler oder das sägezahnartige Profil mindestens zwei Einbuchtungen (126) und mindestens eine Zahnspitze (125), vorzugsweise zwei Zahnspitzen (125) aufweist.

3. Korbsegment nach einem der Ansprüche 1 oder 2, **dadurch gekennzeichnet, dass** der Höhenabstand (h) des Wellenberges zum Wellental oder der Zahnspitze (125) zur Einbuchtung (126) (in vertikaler Richtung gemessen) 1,5 mm bis 5,0 mm beträgt, vorzugsweise 1,75 mm.

4. Korbsegment nach einem der Ansprüche 1 bis 3, **dadurch gekennzeichnet, dass** die an den Wellentälern oder den Einbuchtungen gemessene Fingerbreite (B) 12 mm bis 13 mm und die Fingerlänge (I), gemessen in vertikaler Richtung zur Querleiste 40 mm bis 60 mm vorzugsweise 42 mm und/oder die Finderdicke 7 mm bis 9 mm, vorzugsweise 8 mm beträgt.

5. Korbsegment nach einem der Ansprüche 1 bis 4, **dadurch gekennzeichnet, dass** die Finger (121) nebeneinanderliegender Querleisten (122) zueinander versetzt angeordnet sind.

6. Korbsegment nach einem der Ansprüche 1 bis 5, **dadurch gekennzeichnet, dass** das freie Ende der Finger (121) jeweils zur benachbarten Querleiste (122) beabstandet angeordnet ist, vorzugsweise in einem Abstand von 10 mm bis 15 mm, vorzugsweise bei 13 mm.

7. Korbsegment nach einem der Ansprüche 1 bis 6, **dadurch gekennzeichnet, dass** der Abstand benachbarter Finger (121) auf ein und derselben Querleiste (122) 15 mm bis 20 mm beträgt.

8. Korbsegment nach einem der Ansprüche 1 bis 7, **dadurch gekennzeichnet, dass** bei einem Tangential-Mähdreschkorb die Finger (121) parallel zueinander angeordneter Querleisten (122) unter gegensinnig angeordneten Fingerwinkeln (α) angeordnet sind oder dass die Finger (121) bei einem Axial-Mähdreschkorb unter gleichsinnigen Fingerwinkeln (α) angeordnet sind.

9. Korbsegment nach einem der Ansprüche 1 bis 8, **dadurch gekennzeichnet, dass** der Fingerwinkel (α) ± (20° bis 50°), vorzugsweise ± (30° bis 40°) beträgt.

10. Korbsegment nach einem der Ansprüche 1 bis 9, **dadurch gekennzeichnet, dass** der Fingerwinkel (α) und die Ausrichtung der Finger (121) so gewählt sind, dass das Erntegut zumindest im Wesentlichen vertikal auf das wellen- oder sägezahnartige Profil auftrifft.

11. Korbsegment nach einem der Ansprüche 1 bis 10, **dadurch gekennzeichnet, dass** die Fingerleisten (12) schwenkbar befestigt sind.

## Claims

1. Basket segment (10) for a combine harvester for separating crop material, wherein the basket segment extends in an arc-shaped manner in a circumferential direction about a basket axis (15) and has several finger bars (12) which have crossbars (122) extending parallel to the basket axis (15), on each of which a plurality of fingers (121) are arranged parallel to one another, which are inclined at an acute finger angle (α) relative to a vertical line extending transversely to the longitudinal axis of the cross bar (122), **characterized in that** at least a part of the fingers (121) has a wavy or sawtooth-like profile (125, 126, 127) on one of the two longitudinal sides (124).

2. Basket segment according to claim 1, **characterized in that** the wave profile has at least one wave crest, preferably at least two wave crests and two wave troughs, or the sawtooth-like profile has at least two indentations (126) and at least one tooth tip (125), preferably two tooth tips (125).

3. Basket segment according to one of claims 1 or 2, **characterized in that** the vertical distance (h) of the wave crest to the trough or of the tooth tip (125) to the indentation (126) (measured in the vertical direction) is 1.5 mm to 5.0 mm, preferably 1.75 mm.

4. Basket segment according to one of claims 1 to 3, **characterized in that** the finger width (B) measured at the wave troughs or the indentations is 12 mm to 13 mm, and the finger length (l), measured in the vertical direction relative to the crossbar, is 40 mm to 60 mm, preferably 42 mm, and/or the finger thickness is 7 mm to 9 mm, preferably 8 mm.

5. Basket segment according to one of claims 1 to 4, **characterized in that** the fingers (121) of adjacent crossbars (122) are arranged offset to one another.

6. Basket segment according to one of claims 1 to 5, **characterized in that** each free end of the fingers (121) is spaced apart from the respective adjacent crossbar (122), preferably at a distance of 10 mm to 15 mm, preferably 13 mm.

7. Basket segment according to one of claims 1 to 6, **characterized in that** the distance between adjacent fingers (121) on a single crossbar (122) is 15 mm to 20 mm.

8. Basket segment according to one of claims 1 to 7, **characterized in that**, in a tangential combine harvester basket, the fingers (121) of crossbars (122) arranged parallel to one another are arranged under inversely arranged finger angles (α), or that, in an axial combine harvester basket, the fingers (121) are arranged under concordantly arranged finger angles (α).

9. Basket segment according to one of claims 1 to 8, **characterized in that** the finger angle (α) is ± (20° to 50°), preferably ± (30° to 40°).

10. Basket segment according to one of claims 1 to 9, **characterized in that** the finger angle (α) and the orientation of the fingers (121) are selected such that the crop material strikes the wavy or sawtooth-like profile at least substantially vertically.

11. Basket segment according to one of claims 1 to 10, **characterized in that** the finger strips (12) are pivotally mounted.

## Revendications

1. Segment de panier (10) pour une moissonneuse-batteuse destiné à séparer de la récolte, le segment de panier s'étendant en forme d'arc dans une direction circonférentielle autour d'un axe de panier (15) et comportant plusieurs barrettes à doigts (12) qui comportent des barrettes transversales (122) s'étendant parallèlement à l'axe de panier (15), sur chacune desquelles sont disposés une multitude de doigts (121) parallèles les uns aux autres, qui sont inclinés selon un angle de doigt aigu (α) par rapport à une verticale s'étendant transversalement à l'axe longitudinal de la barre transversale (122), **caractérisé en ce qu'**au moins une partie des doigts (121) présente, sur l'un des deux côtés longitudinaux (124), un profil ondulé ou en dents de scie (125, 126, 127).

2. Segment de panier selon la revendication 1, **caractérisé en ce que** le profil ondulé comporte au moins un sommet d'onde, de préférence au moins deux sommets d'onde et deux creux d'onde, ou **en ce que** le profil en dents de scie comporte au moins deux creux (126) et au moins une pointe de dent (125), de préférence deux pointes de dent (125).

3. Segment de panier selon l'une des revendications 1 ou 2, **caractérisé en ce que** la distance verticale (h) entre le sommet de l'onde et le creux de l'onde ou entre la pointe de dent (125) et l'encoche (126) (mesurée dans le sens vertical) est comprise entre 1,5 mm et 5,0 mm, de préférence 1,75 mm.

4. Segment de panier selon l'une des revendications 1 à 3, **caractérisé en ce que** la largeur des doigts (B), mesurée au niveau des creux d'onde ou des encoches est comprise entre 12 mm et 13 mm et que la longueur des doigts (l), mesurée dans le sens vertical par rapport à la barre transversale, est comprise entre 40 mm et 60 mm, de préférence 42 mm, et/ou que l'épaisseur des doigts est comprise entre 7 mm et 9 mm, de préférence 8 mm.

5. Segment de panier selon l'une des revendications 1 à 4, **caractérisé en ce que** les doigts (121) de barres transversales (122) adjacentes sont disposés de manière décalée les uns par rapport aux autres.

6. Segment de panier selon l'une des revendications 1 à 5, **caractérisé en ce que** l'extrémité libre des doigts (121) est disposée à chaque fois à distance de la barre transversale adjacente (122), de préférence à une distance comprise entre 10 mm et 15 mm, de préférence à 13 mm.

7. Segment de panier selon l'une des revendications 1 à 6, **caractérisé en ce que** l'écart entre des doigts adjacents (121) sur une même barre transversale (122) est compris entre 15 mm et 20 mm.

8. Segment de panier selon l'une des revendications 1 à 7, **caractérisé en ce que**, dans le cas d'un panier de moissonneuse-batteuse tangentiel, les doigts (121) sont disposés sur des barres transversales (122) parallèles les unes aux autres selon des angles de doigts (α) opposés, ou **en ce que**, dans le cas d'un panier de moissonneuse-batteuse axial, les doigts (121) sont disposés selon des angles de doigts (α) identiques.

9. Segment de panier selon l'une des revendications 1 à 8, **caractérisé en ce que** l'angle des doigts (α) est compris entre ± (20° et 50°), de préférence entre ± (30° et 40°).

10. Segment de panier selon l'une des revendications 1 à 9, **caractérisé en ce que** l'angle des doigts (α) et l'orientation des doigts (121) sont choisis de telle sorte que la récolte heurte le profil ondulé ou en dents de scie au moins essentiellement à la verticale.

11. Segment de panier selon l'une des revendications 1 à 10, **caractérisé en ce que** les barrettes à doigts (12) sont fixées de manière pivotante.
